# EUROPEAN PATENT SPECIFICATION

(11) **EP 3 715 304 B1**
(45) Date of publication and mention of the grant of the patent: **25.12.2024**
(21) Application number: 17932299.5
(22) Date of filing: 20.11.2017
(51) Int. Cl.: B66B 7/08, F16G 11/06, F16G 11/04

(54) **ROPE END FASTENING DEVICE AND ROPE END FASTENING METHOD**
SEILENDBEFESTIGUNGSVORRICHTUNG UND SEILENDBEFESTIGUNGSVERFAHREN
DISPOSITIF ET PROCÉDÉ D'ATTACHE D'EXTRÉMITÉ DE CÂBLE

(43) Date of publication of application: 30.09.2020
(73) Proprietor: Hitachi Building Systems Co., Ltd., Chiyoda-ku Tokyo 101-8941 (JP)
(72) Inventor: HARUYAMA, Naoki, Tokyo 101-8941 (JP); YAGI, Nobuaki, Tokyo 101-8941 (JP); SEKIYA, Yuji, Tokyo 101-8941 (JP)
(74) Representative: Mewburn Ellis LLP
(86) International application number: PCT/JP2017/041611
(87) International publication number: WO 2019/097709

(56) References cited:
- WO-A1-2006/126276
- WO-A1-2006/126276
- DE-B- 1 010 713
- JP-A- 2011 051 752
- JP-A- 2012 096 907
- JP-A- 2012 096 907
- JP-A- H0 288 546
- JP-A- H06 330 487
- JP-U- H0 224 149
- JP-U- S5 254 773
- JP-U- S5 254 773
- JP-Y2- H0 538 269
- US-A- 6 058 575

## Description

### Technical Field

The present invention relates to a rope end fastening device to fasten a rope end of a main rope coupling a riding car to a counterweight of an elevator to a rope socket, and a rope end fastening method.

### Background Art

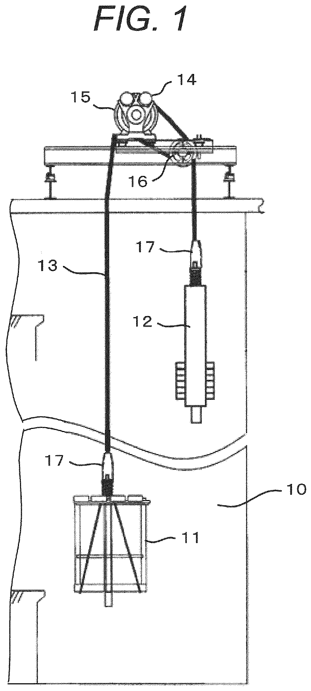

A typical elevator has a configuration where a riding car and a counterweight are coupled with a main rope, and a hoisting machine is interposed in the middle of the main rope to move up and down the riding car. For example, in Figure 1, in a hoistway 10 of an elevator, a riding car 11 that moves up and down inside the hoistway 10 is disposed, and further, a counterweight 12 that moves up and down in a direction opposite to the riding car 11 inside the hoistway 10 is disposed. The riding car 11 and the counterweight 12 are coupled with a main rope 13 suspended in a well bucket manner. The main rope 13 is partially wound around a drive pulley 15 of a hoisting device 14 and a warp pulley 16. The main rope 13 moves in conjunction with a turn of the drive pulley 15, and thus the riding car 11 and the counterweight 12 move up and down inside the hoistway 10 corresponding to a movement direction of the main rope 13.

The main rope 13 of the elevator is typically made of a wire rope, and thus cannot be directly coupled to the riding car 11 or the counterweight 12. In view of this, for example, in a 1:1 roping system elevator as illustrated in Figure 1, an end of the main rope 13 is coupled to a rope socket 17 having a predetermined shape, and the main rope 13 is coupled to the riding car 11 and the counterweight 12 via this rope socket 17.

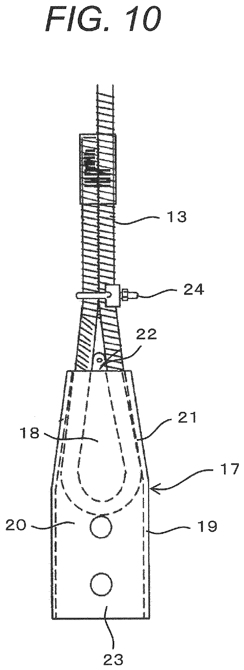

Figure 10 illustrates a state of fastening a rope socket 17 and an end of a main rope 13. The rope socket 17 is typically referred to as a wedge type rope socket and includes, for example, a wedge 18 and a socket main body 19. The wedge 18 includes a rope engaging member having a wedge shape, and the socket main body 19 includes a housing portion 20 for housing the wedge 18. In a part of an internal surface that forms the housing portion 20 of the socket main body 19, a wedge receiving surface 21 matching with an inclined surface of the wedge 18 is disposed.

In order to fasten the end of the main rope 13 to the rope socket 17, first, the end of the main rope 13 is inserted into the housing portion 20 from an opening 22 formed on a distal end side of the socket main body 19, and the end of the main rope 13 is extracted from a larger opening 23 on an opposite side. Next, the main rope 13 extracted from the opening 23 is wound around an outer periphery part of the wedge 18, and the main rope 13 is folded back. While this state is kept, the wedge 18 is inserted from its distal end into the housing portion 20. Then, the end of the main rope 13 is extracted from the opening 22 and pulled, so as to appropriately dispose the wedge 18 inside the housing portion 20 of the socket main body 19. Finally, an end process where the main rope 13 and its end are brought together such that the main rope 13 abut on its end and this part is bound with an anchoring bracket 24 to be fixed is performed.

Then, when the end of the main rope 13 is fastened to the rope socket 17, an operation of drawing the wedge 18 around which the main rope 13 is wound into the socket main body 19 has been performed by a human force of an operator. When the main rope 13 has a surface on which oil is attached to easily slip and the main rope 13 has a thick diameter, it becomes difficult to perform an operation of winding the main rope 13 corresponding to a curvature of the wedge 18 and an operation of drawing the wedge 18 into the socket main body 19 themselves by a human force.

As a method to solve such a problem, for example, Japanese Patent Application Laid-Open No. 2012-96907 (PTL 1) discloses a technique in which gripping members that grip a main rope exposed from a rope socket and its end and a receiving member that engages with a socket main body such that the receiving member is opposed to it are mounted, and a separation distance between the gripping member and the receiving member is increased with separation bolts disposed in the gripping member to draw a wedge into a housing portion of the socket main body.

Figure 11 illustrates a rope end fastening device disclosed in PTL 1. This rope end fastening device includes: a gripping member 25 that fixes a load side 13A of a main rope 13 and its end side 13B that extend outside a socket from an opening of a socket main body 19 such that the load side 13A and the end side 13B are sandwiched; a receiving member 26 disposed between the gripping member 25 and one end portion of the socket main body 19 that forms an opening 22 in a state where the main rope 13 penetrates a housing portion 20 to regulate a displacement to the socket main body 19 side on the one end portion of the socket main body 19; and separation bolts 27 disposed in the gripping member 25 to separate the gripping member 25 in a direction separating from the receiving member 26. Then, the wedge 18 around which the main rope 13 is wound can be easily drawn up to an appropriate position in the housing portion 20 inside the socket main body 19 by separating the gripping member 25 and the receiving member 26 with the separation bolts 27 when an end of the main rope 13 is fastened to a rope socket 17.

WO 2006/126276 A1 discloses a rope socketing device for an elevator that has a rope holding body for holding a rope and has a holding body displacement device for displacing the rope holding body in the direction moving away from a socket. The holding body displacement device has a screw rod screwed to the rope holding body. The screw rod is configured to be displaced relative to the rope holding body when the screw rod is turned. When the screw rod displaced relative to the rope holding body is received by the socket, the rope holding body is displaced in the direction moving away from the socket. An end of the rope is pulled into a rope insertion hole in the socket by the displacement of the rope holding body in the direction moving away from the socket.

JP S52 54773 U discloses a rope end treatment device for elevators, buildings, and the like. The device has a rope clamping device immersed at one end of the base and a socket tensioning device at the other end which can be adjusted.

JP H02 24149 U discloses a rope socket that has a substantially triangular stopper end that fits into a loop formed at the end of a wire rope, and is inserted in an internal structure with which it engages in a unidirectional manner.

DE 10 10 713 B relates to thimbles for fastening conveyor ropes to an intermediate harness of conveyor cages and the like.

### Citation List

### Patent Literature

PTL 1: Japanese Patent Application Laid-Open No. 2012-96907

### Summary of Invention

### Technical Problem

Incidentally, the fastening device disclosed in PTL 1 does not include a guide function member that guides the gripping member 25 and the receiving member 26, and therefore the receiving member 26 is sometimes displaced in a direction perpendicular to an extending direction of the main rope 13 with respect to the rope socket 17 and/or the gripping member 25 when the separation bolts 27 are screwed to draw the wedge 18 into the housing portion 20 of the socket main body 19. When the receiving member 26 is displaced, a corner portion of the receiving member 26 possibly and locally damages a contact part of the main rope 13 and the receiving member 26. This causes a problem of damaging a quality of the main rope.

An object of the present invention is to provide a rope end fastening device that suppresses the damage of the main rope to ensure the quality of the main rope, and a rope end fastening method.

### Solution to Problem

The present invention is defined by the appended claims 1-9.

According to a first aspect of the present invention there is provided a rope end fastening device as specified in claim 1.

According to a second aspect of the present invention there is provided a rope end fastening method as specified in claim 9.

### Advantageous Effects of Invention

With the present invention, since the socket main body and the movement regulating member are not displaced with respect to the main rope when the wedge is drawn into the housing portion of the socket main body, the damage of the main rope can be suppressed to ensure the quality of the main rope.

### Brief Description of Drawings

Figure 1 is a configuration diagram illustrating a typical configuration of an elevator.
Figure 2 is a plan view illustrating a configuration of a rope end fastening device according to an embodiment of the present invention without illustrating a main rope.
Figure 3 is a side view of the rope end fastening device illustrated in Figure 2.
Figure 4 is a plan view illustrating the configuration of the rope end fastening device according to the embodiment of the present invention with illustrating the main rope.
Figure 5 is a side view of one of unit holding members of a holding member illustrated in Figure 2.
Figure 6 is a side view of the holding member (without illustrating the main rope) configured by stacking two of the unit holding members illustrated in Figure 5.
Figure 7 is a side view of the holding member (without illustrating the main rope) configured by turning over and stacking two of the unit holding members illustrated in Figure 5.
Figure 8 is an A-A arrow view viewed in the arrow A-A direction of the rope end fastening device illustrated in Figure 3.
Figure 9A is a B-B arrow view viewed in the B-B arrow direction of the rope end fastening device illustrated in Figure 2.
Figure 9B is a C-C arrow view viewed in the C-C arrow direction of the rope end fastening device illustrated in Figure 9A.
Figure 10 is a configuration diagram illustrating a fastening state of the main rope and a rope socket.

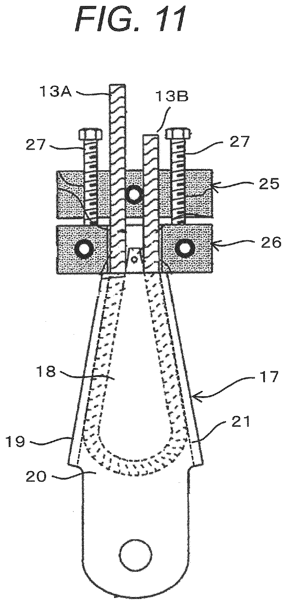

Figure 11 is a configuration diagram illustrating a configuration of a rope end fastening device disclosed in PTL 1.

### Description of Embodiments

While the following describes an embodiment of the present invention in detail using the drawings, the present invention is not limited to the following embodiment, and its scope includes various modifications and application examples in a technical concept of the present invention.

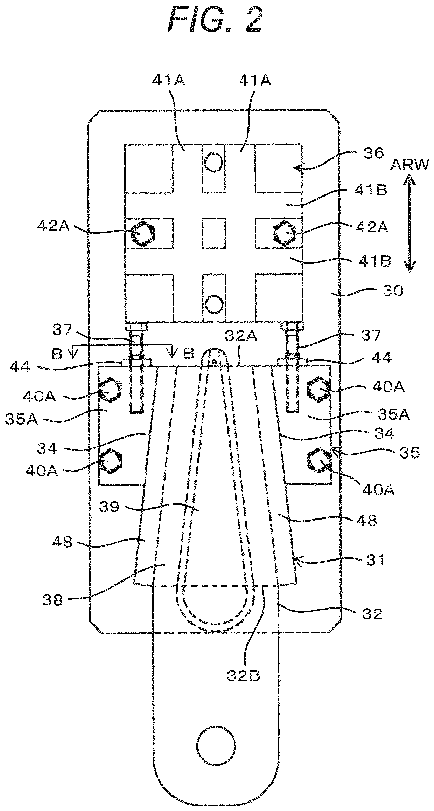

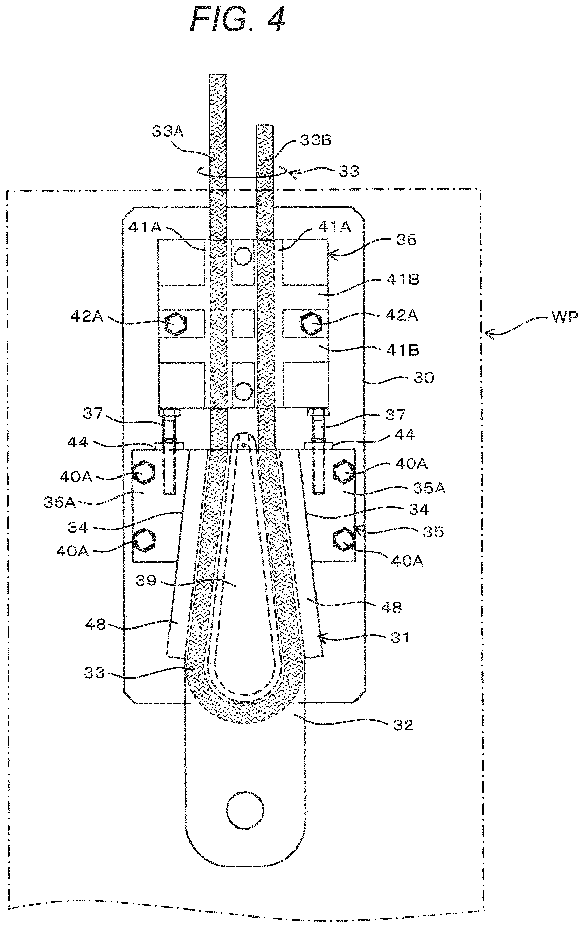

A configuration of a rope end fastening device that becomes the embodiment of the present invention is described in detail based on Figure 2 to Figure 4. Figure 2 omits illustration of a main rope, and Figure 4 illustrates the main rope.

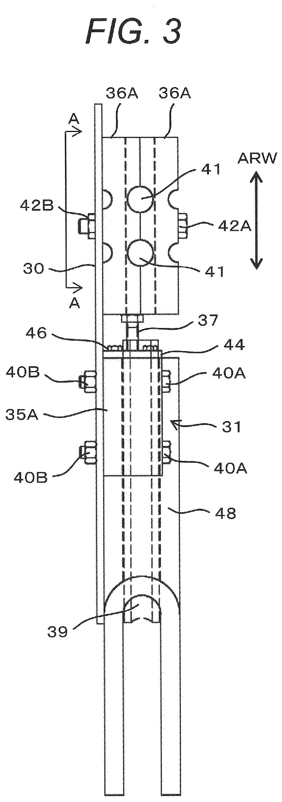

As illustrated in Figure 2 and Figure 3, a flat plate shaped base member 30 having a predetermined thickness is prepared, and a movement regulating member 35 including regulating surfaces 34 that regulate a movement of a socket main body 32 of a rope socket 31 in a direction perpendicular to an extending direction of a main rope 33 (see Figure 4) is mounted to the base member 30. On the base member 30, a holding member 36 fixed to a load side 33A and an end side 33B (see Figure 4) of the main rope 33 is movably placed with respect to the base member 30. Between the holding member 36 and the movement regulating member 35, separation members 37 such as jack bolts are disposed to increase and decrease a distance between the holding member 36 and the movement regulating member 35. The following descriptions of the jack bolts 37 will be given as the representative separation members 37.

While Figure 2 and Figure 3 illustrate a wedge shaped wedge 39 housed in a housing portion 38 in the socket main body 32 for convenience, as illustrated in Figure 4, the main rope 33 is wound around this wedge 39, and the wedge 39 is housed in the housing portion 38 in the socket main body 32 to constitute the rope socket 31. The rope socket 31 with this wedge 39 is to be coupled to a riding car 11 and a counterweight 12.

The base member 30 is made of a metal plate having a predetermined thickness, and its shape has a rectangular shape. In this embodiment, on the base member 30, the movement regulating member 35 is fixedly placed, the holding member 36 is movably placed, and thus the base member 30 is formed to have a rectangular shape. As described later, the movement regulating member 35 is detachably/attachably fixed such that the base member 30 is sandwiched with fixing bolts and nuts.

The movement regulating member 35 includes a pair of unit movement regulating members 35A and is detachably/attachably mounted to the base member 30 with fixing bolts 40A such that the pair of unit movement regulating members 35A are mutually opposed at a predetermined interval in a short side direction of the base member 30. This causes the socket main body 32 to be disposed between the unit movement regulating members 35A.

In the unit movement regulating member 35A, the regulating surfaces 34 that abut on a pair of inclined surfaces 48 formed on side surfaces of the socket main body 32 are formed. Since the socket main body 32 enters between the unit movement regulating members 35A in a direction identical to an axis line of a longitudinal direction of the base member 30 and is disposed, the inclined surfaces 48 of the socket main body 32 have a shape expanding toward a direction opposite to the entering direction. The regulating surfaces 34, which abut on these inclined surfaces 48 and are formed on the unit movement regulating members 35A, also have the shape expanding toward the direction opposite to the entering direction of the socket main body 32.

Accordingly, since disposing the socket main body 32 between the unit movement regulating members 35A causes the regulating surfaces 34 of the unit movement regulating members 35A to abut on the inclined surfaces 48 formed on the side surfaces of the socket main body 32, the movement of the socket main body 32 in the entering direction (the longitudinal direction of the base member 30) of the socket main body 32 is regulated, and additionally a movement in a direction perpendicular to the extending direction (the short side direction of the base member 30) of the main rope 33 is regulated. Here, an angle of the regulating surface 34 of the unit movement regulating member 35A is set to match an angle of the pair of inclined surfaces 48 of the socket main body 32.

As illustrated in Figure 3, since the unit movement regulating member 35A is configured to be fixed to the base member 30 with the fixing bolts 40A and the nuts 40B, when a length between the pair of unit movement regulating members 35A is changed, the unit movement regulating members 35A can be configured to be selectively fixed by forming a plurality of fixing screw holes in the short side direction of the base member 30 or can be configured to be fixed by forming oblong holes extending in the short side direction to sandwich and fix the unit movement regulating members 35A and the base member 30 with nuts and bolts. With this, when an interval length between the pair of unit movement regulating members 35A is changed corresponding to a body size (shape) of the socket main body 32, the unit movement regulating members 35A can correspond to rope sockets 31 having various sizes.

The holding member 36 is formed to have a square shape, and respective two arc-shaped rope fixing grooves 41 are formed along the axis line of the longitudinal direction and an axis line of the short side direction of the base member 30. As illustrated in Figure 2 to Figure 4, a pair of rope fixing grooves 41A that houses and fixes the load side 33A and the end side 33B of the main rope 33 along the axis line of the longitudinal direction of the base member 30, and a pair of rope fixing grooves 41B that houses and fixes the load side 33A and the end side 33B of the main rope 33 along the axis line of the short side direction of the base member 30 are formed. The rope fixing groove 41 has a cross-sectional shape having a cross-sectional surface orthogonal to a direction in which the rope fixing groove 41 extends, and the cross-sectional surface is formed to have an arc shape

Accordingly, the pair of rope fixing grooves 41A and the pair of rope fixing grooves 41B are formed to orthogonally intersect. The arc-shaped rope fixing grooves 41A and the rope fixing grooves 41B have different radii, and one of the rope fixing groove 41A and the rope fixing groove 41B is selected corresponding to a diameter of the main rope 33.

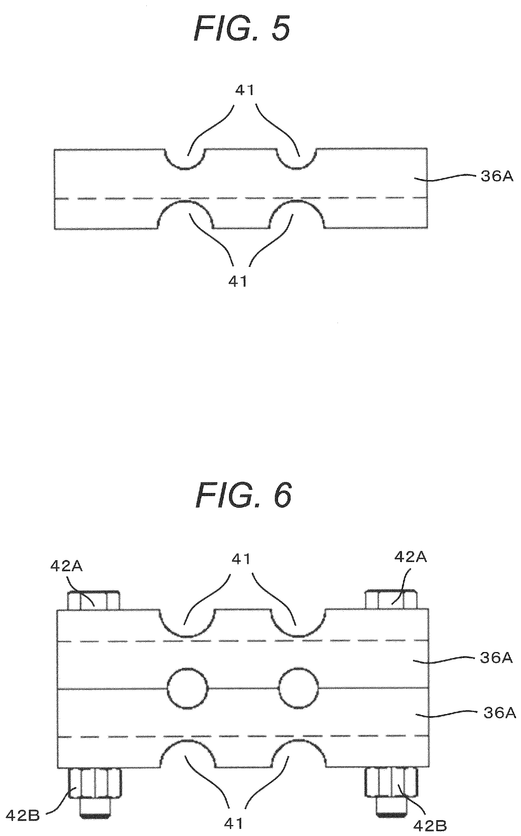

The holding member 36 includes a pair of unit holding members 36A. Housing the load side 33A and the end side 33B of the main rope 33 in the rope fixing grooves 41 formed on each of the pair of unit holding members 36A and strongly sandwiching to fix the pair of unit holding members 36A with fixing bolts 42A and nuts 42B (see Figure 6) ensure the integrally fixed holding member 36 and main rope 33.

Figure 5 to Figure 7 illustrate a specific shape of the holding member 36. As illustrated in Figure 2 and Figure 5, on one surface of the unit holding members 36A, the respective pairs of rope fixing grooves 41A and 41B having arc shapes orthogonally intersect to form cross shapes. Also on the other surface of the unit holding member 36A, the respective pairs of rope fixing grooves 41A and 41B having arc shapes orthogonally intersect to form cross shapes.

Respective diameters of the rope fixing grooves 41 formed on the one surface and the other surface of the unit holding members 36A are configured to have different diameters. Thus, the one surfaces of the unit holding members 36A can correspond to two main ropes 33 having different diameters, and the other surfaces of the unit holding members 36A can similarly correspond to two main ropes 33 having further different diameters, which can correspond to the four main ropes 33 having different diameters in total.

Figure 6 is a view of the holding member 36 illustrated in Figure 2 and Figure 4 viewed from a side, and the holding member 36 includes the two unit holding members 36A illustrated in Figure 5 where the pair of rope fixing grooves 41 having an identical small diameter and arc shapes are butted to be fastened and fixed with the fixing bolts 42A and the nuts 42B as fasteners. While not illustrated in the drawing, in practice, the load side 33A and the end side 33B of the main rope 33 are housed to be fixed.

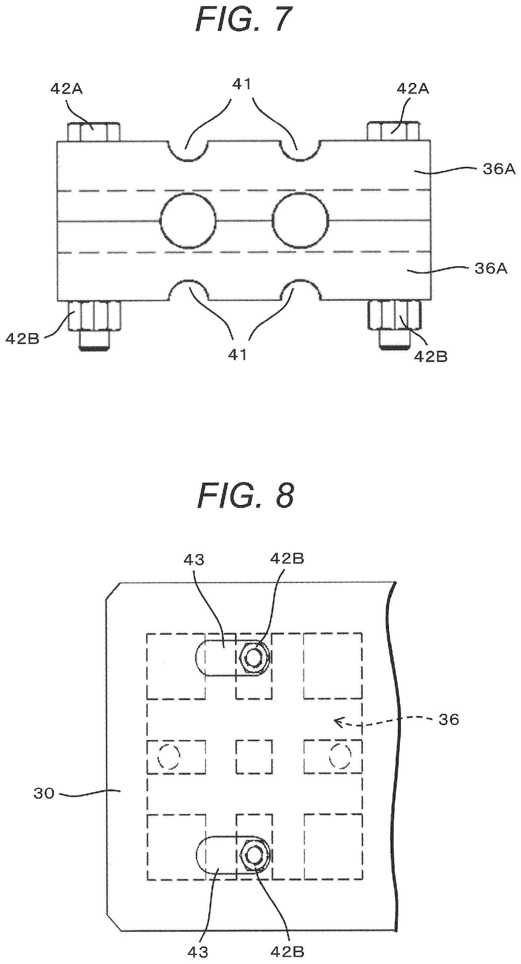

Similarly, Figure 7 is a view of the holding member 36 illustrated in Figure 2 and Figure 4 viewed from a side, and the holding member 36 includes the two unit holding members 36A illustrated in Figure 5 where the pair of rope fixing grooves 41 having an identical large diameter and arc shapes are butted to be fastened and fixed with the fixing bolts 42A and the nuts 42B as fasteners. While this is not also illustrated in the drawing, in practice, the load side 33A and the end side 33B of the main rope 33 are housed to be fixed.

While the unit holding member 36A has both surfaces on which the pair of rope fixing grooves 41 having a cross shape is formed, the unit holding member 36A may have the one surface on which the pair of rope fixing grooves 41 is formed, and the pairs of rope fixing grooves 41 may be each formed to have a cross shape. Further, while the rope fixing groove 41 has a cross-sectional surface formed to have an arc shape, the cross-sectional surface may be formed to have a rectangular shape and preferably have a square shape.

Here, as illustrated in Figure 2 and Figure 3, the holding member 36 is configured to move along an arrow ARW. In view of this, when the holding member 36 is placed on the base member 30, the nuts 42B interfere with a surface of the base member 30.

To avoid this, as illustrated in Figure 8, on the base member 30, oblong holes (guide grooves) 43 that movably guide the nuts 42B are formed. While this oblong hole 43 is formed along the axis line of the longitudinal direction of the base member 30 and has any length, the length is configured to be equal to or more than at least a length separated with the jack bolts 37. It is only necessary that the oblong hole 43 has a width having a length to house the nut 42B, and further, is configured to have a width to guide the nut 42B.

Besides this, on the surface of the base member 30, guide protrusions may be disposed to guide the movement of the holding member 36. These guide protrusions can be integrally disposed with the base member 30 along side surfaces of the holding member 36, which moves on the base member 30, such that the guide protrusions are across the holding member 36. This ensures the stabilized tension operation of the main rope 33.

Thus, the holding member 36 moves while being guided by the oblong holes 43 or the guide protrusions with respect to the base member 30, and this ensures the reduced possibility of damaging the main rope 33 when the wedge 39 is retracted.

Returning to Figure 2 and Figure 4, the jack bolts 37 are disposed between the unit movement regulating members 35A and the unit holding members 36A. The jack bolt 37 has a function to increase and reduce the distance between the unit movement regulating member 35A and the unit holding member 36A. When the distance between the unit movement regulating member 35A and the unit holding member 36A is increased with the jack bolt 37, the holding member 36 is separated from the movement regulating member 35, and the movement of the holding member 36 is transmitted to the main rope 33.

Therefore, when the wedge 39 enters an inside of the housing portion 38 of the socket main body 32 to reach up to an appropriate position together with the main rope 33, the increase movement with the jack bolts 37 is terminated at the position. Afterwards, when screwing the holding member 36 with the fixing bolts 42A and the nuts 42B is released, the holding member 36 is separated into the unit holding members 36A and the holding member 36 can be removed from the main rope 33. Further, when the rope socket 31 is removed from the movement regulating member 35, finally, the main rope 33 and the rope socket 31 are strongly fastened.

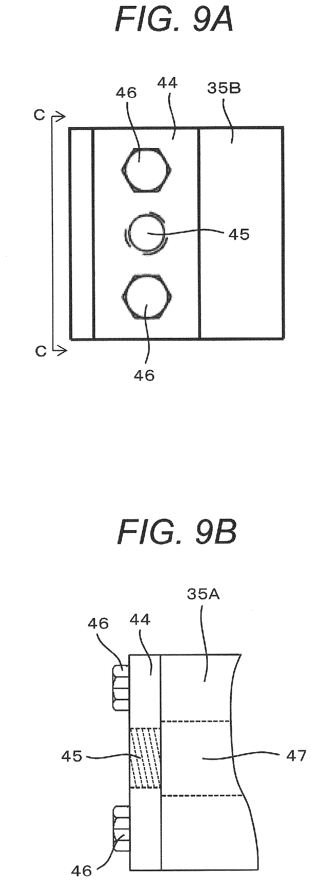

Next, the jack bolt 37 will be described. As illustrated in Figure 2, Figure 9A, and Figure 9B, the unit movement regulating member 35A has an end surface 35B on the holding member 36 side, and a nut plate 44 is fixed on each of the end surfaces 35B. A threaded jack bolt screw hole 45 as a separation member screw hole is formed near an approximate center of the nut plate 44, and the nut plate 44 is fixed to the end surface 35B of the unit movement regulating member 35A on the holding member 36 side with fixing bolts 46 so as to be across this jack bolt screw hole 45. Inside the unit movement regulating member 35A, a jack bolt housing hole 47 is formed from the jack bolt screw hole 45 to the unit movement regulating member 35A.

Accordingly, as illustrated in Figure 2, the threaded jack bolt 37 is screwed with the jack bolt screw hole 45 in the nut plate 44 to be housed in the jack bolt housing hole 47. When the jack bolt 37 is rotated to be moved in the holding member 36 direction in this state, the distance between the unit movement regulating member 35A and the unit holding member 36A can be increased. The jack bolt screw hole 45 can be directly formed at a part of the jack bolt housing hole 47 without using the nut plate 44.

When the distance between the unit movement regulating member 35A and the unit holding member 36A is increased, the holding member 36 is separated from the movement regulating member 35, and the movement of the holding member 36 is transmitted to the main rope 33. Therefore, when the wedge 39 enters the inside of the housing portion 38 of the socket main body 32 to reach up to the appropriate position together with the main rope 33, the increase movement with the jack bolts 37 is terminated at the position.

In this embodiment, since the movement regulating member 35 is configured to be fixed to the base member 30 with the fixing bolts 40A and the nuts 40B, and further, the holding member 36 is configured to be guided and moved along the base member 30, the holding member 36 and the movement regulating member 35 are not displaced in the direction perpendicular to the extending direction of the main rope 33, and further, the jack bolts 37 are constantly pressed onto predetermined positions on the holding member 36, thus ensuring the operation in the stable state.

Further, if, for example, the screw portion in the jack bolt screw hole 45 in the nut plate 44 with which the jack bolt 37 is screwed is damaged because of aged deteriorations and thus does not function, it is only necessary to replace the nut plate 44. This brings down the repair cost. Further, the nut plate 44 can be easily replaced using the fixing bolts 46.

While with the above-described embodiment the jack bolts 37 are mounted to the unit movement regulating member 35 via the nut plates 44, the jack bolts 37 can also be mounted to the surface of the unit holding member 36A opposed to the unit movement regulating member 35A via the nut plates 44.

Next, a procedure of a fastening operation of the main rope 33 and the rope socket 31 using the rope end fastening device according to the above-described embodiment will be described using Figure 4.

It is assumed that the fastening operation of the main rope 33 and the rope socket 31 is performed on site, and thus it is considered that the fastening operation is performed while the base member 30 to which the movement regulating member 35 is mounted is placed on a floor surface, or is performed while the base member 30 in a standing state is mounted to a working board WP standing upright from the floor surface. In this embodiment, the fastening operation is performed in the state illustrated in Figure 4 where the base member 30 in the standing state is mounted to the working board WP standing upright from the floor surface.

In order to fasten the main rope 33 to the rope socket 31, first, the socket main body 32 is disposed between the pair of unit movement regulating members 35A to cause the regulating surfaces 34 of the unit movement regulating members 35A to abut on the inclined surfaces 48 of the socket main body 32, so as to regulate the movement of the socket main body 32 to the holding member 36 side. At this time, the jack bolt 37 is in a state where the jack bolt 37 is screwed with the nut plate 44 to be housed in the jack bolt housing hole 47 of the unit movement regulating member 35A by a predetermined amount.

Next, one end of the main rope 33 is inserted into the housing portion 38 from an opening 32A (see Figure 2) formed on a distal end portion of the socket main body 32, and the main rope 33 is extracts from a larger opening 32B (see Figure 2) on its opposite side.

Next, the main rope 33 extracted from the opening 32B of the socket main body 32 is folded back. While this state is kept, the wedge 39 is inserted into and disposed inside the housing portion 38 of the socket main body 32 such that the main rope 33 is wound.

Next, the load side 33A and the end side 33B of the main rope 33 that extend to an outside (the axis line direction side of the base member 30) of the socket main body 32 from the opening 32A of the socket main body 32 are sandwiched with the unit holding members 36A to mutually fix the main rope 33 and the holding member 36. In this case, the pair of unit holding members 36A, which has the rope fixing grooves 41 corresponding to a rope diameter of the main rope 33, sandwiches the load side 33A and the end side 33B of the main rope 33, the main rope 33 is strongly fixed with the fixing bolts 42A and the nuts 42B, and further, the nuts 42B are housed in the oblong holes 43 of the base member 30 to be movably engaged.

Next, the jack bolts 37 are rotated to move toward the holding member 36 direction with, for example, a wrench, so as to increase the distance between the unit movement regulating members 35A and the unit holding member 36A. Increasing the distance between the unit movement regulating members 35A and the unit holding members 36A separates the holding member 36 from the movement regulating member 35 to transmit the movement of the holding member 36 to the main rope 33. Therefore, when the wedge 39 enters the inside of the housing portion 38 of the socket main body 32 to reach up to the appropriate position together with the main rope 33, increasing the distance between the unit movement regulating members 35A and the unit holding members 36A with the jack bolts 37 is terminated at the position. The jack bolts 37 are pressed onto the predetermined positions on the holding member 36, and this ensures drawing the wedge 39 up to the appropriate position inside the housing portion 38 of the socket main body 32 in the stable state.

Thus, since the holding member 36 moves while being guided by the base member 30, when the wedge 39 is drawn into the housing portion 38 of the socket main body 32, the holding member 36 is not displaced in the direction perpendicular to the extending direction of the main rope 33 with respect to the socket main body 32, thus suppressing the possibility of damaging the main rope 33 to ensure the quality of the rope.

As described above, the rope end fastening device of the present invention includes: the base member having a predetermined length; the movement regulating member that is fixedly disposed on the base member and includes the regulating surfaces that regulate the movement of the socket main body to the rope side and regulate the movement of the socket main body in the direction perpendicular to the extending direction of the rope; the holding member that is fixed to the load side and the end side of the rope extracted from the socket main body and is movably disposed with respect to the base member; and the separation member that is disposed between the holding member and the movement regulating member and changes the distance between the holding member and the movement regulating member.

With this, the socket main body and the movement regulating member are not displaced with respect to the main rope when the wedge is drawn into the housing portion of the socket main body, and this suppresses damaging the main rope to ensure the quality of the main rope.

The present invention is not limited to the above-described embodiment but includes various modifications within the scope of the appended claims 1-9.

### Reference Signs List

10... hoistway,
11... riding car,
12... counterweight,
13... main rope,
17... rope socket,
30... base member,
31... rope socket,
32... socket main body,
33... main rope,
33A... load side,
33B... end side,
34... regulating surface,
35... movement regulating member,
35A... unit movement regulating member,
36... holding member,
36A... unit holding member,
37... separation member (jack bolt),
38... housing portion,
39... wedge,
40A... fixing bolt,
40B... nut,
41, 41A, 41B... rope fixing groove,
42A... fixing bolt,
42B... nut,
43... oblong hole,
44... nut plate,
45... jack bolt screw hole,
46... fixing bolt,
47... jack bolt housing hole,
48... inclined surface,

## Claims

1. A rope end fastening device comprising a rope end fastening mechanism that fastens a socket main body (32) and a rope (33) by drawing a wedge (39), around which the rope (33) is wound, up to a predetermined position in a housing portion (38) formed in the socket main body (32) of a rope socket (31),
wherein the rope end fastening mechanism includes:
a base member (30) having a predetermined length and a rectangular shape;
a movement regulating member (35) that includes a pair of unit movement regulating members (35A) across the socket main body (32) including regulating surfaces (34), the regulating surfaces (34) regulating a movement of the socket main body (32) in a longitudinal direction of the base member (30) in which the socket main body (32) enters between the unit movement regulating members (35A), and regulating a movement of the socket main body (32) in a short side direction of the base member (30), the unit movement regulating members (35A) being fixed to the base member (30) to ensure adjusting a mutual interval length;
a holding member (36) that is fixed to a load side (33A) and an end side (33B) of the rope (33) extracted from the socket main body (32) and is movably disposed with respect to the base member (30); and
a separation member (37) that is disposed between the holding member (36) and the movement regulating member (35) and changes a distance between the holding member (36) and the movement regulating member (35) .

2. The rope end fastening device according to claim 1,
wherein the socket main body (32) has side surfaces on which a pair of inclined surfaces expanding toward a side opposite to the rope (33) is formed, and
the regulating surfaces (34) of the movement regulating member (35) are formed as a pair of regulating surfaces (34) sandwiching the pair of inclined surfaces of the socket main body (32) from both sides, the pair of regulating surfaces (34) having inclinations along the pair of inclined surfaces of the socket main body (32) and abutting on the pair of inclined surfaces of the socket main body (32).

3. The rope end fastening device according to claim 1,
wherein the holding member (36) includes a pair of unit holding members (36A), and the pair of unit holding members (36A) sandwiches the load side (33A) and the end side (33B) of the rope (33) from both sides to be fixed to the load side (33A) and the end side (33B) of the rope (33) .

4. The rope end fastening device according to claim 3,
wherein the unit holding member (36A) has one surface or both surfaces on which a pair of rope fixing grooves (41) is formed, the pair of rope fixing grooves (41) housing the load side (33A) and the end side (33B) of the rope (33).

5. The rope end fastening device according to claim 4,
wherein the unit holding member (36A) has one surface or both surfaces on which two pairs of rope fixing grooves (41) are formed in mutually perpendicular directions.

6. The rope end fastening device according to claim 5,
wherein the pair of unit holding members (36A) sandwiches the load side (33A) and the end side (33B) of the rope (33) to be fixed with fasteners (42A, 42B), and the fasteners (42A, 42B) are guided by guide grooves (43) that are formed on the base member (30) and are formed along a movement direction of the holding member (36).

7. The rope end fastening device according to any one of claim 1 to claim 6,
wherein the separation member (37) is a jack bolt (37) disposed between the holding member (36) and the movement regulating member (35).

8. The rope end fastening device according to claim 7,
wherein the jack bolt (37) has one end screwed with a nut plate disposed on each of end surfaces of the holding member (36) or the movement regulating member (35).

9. A rope end fastening method using a rope end fastening mechanism that includes a base member (30) having a predetermined length and a rectangular shape, a movement regulating member (35) that includes a pair of unit movement regulating members (35A) across a socket main body (32) including regulating surfaces (34), the regulating surfaces (34) regulating a movement of the socket main body (32) in a longitudinal direction of the base member (30) in which the socket main body (32) enters between the unit movement regulating members (35A), and regulating a movement of the socket main body (32) in a short side direction of the base member (30), the unit movement regulating members (35A) being fixed to the base member (30) to ensure adjusting a mutual interval length, a holding member (36) that is fixed to a load side (33A) and an end side (33B) of the rope (33) extracted from the socket main body (32) and is movably disposed with respect to the base member (30), and a separation member (37) that is disposed between the holding member (36) and the movement regulating member (35) and changes a distance between the holding member (36) and the movement regulating member (35),
the method comprising:
winding the rope (33) around a wedge (39) to be housed in the socket main body (32);
installing the socket main body (32) in which the rope (33) and the wedge (39) are housed to the movement regulating member (35) where the unit movement regulating members (35A) have the mutual interval length adjusted to fit the socket main body (32);
fixing the load side (33A) and the end side (33B) of the rope (33) exposed from the socket main body (32) to the holding member (36); and
separating between the holding member (36) and the movement regulating member (35) with the separation member (37) to adjust positions of the wedge (39) and the rope (33) that are housed in the socket main body (32).

## Patentansprüche

1. Seilende-Befestigungsvorrichtung, umfassend einen Seilende-Befestigungsmechanismus, der einen Aufnahmehauptkörper (32) und ein Seil (33) durch Ziehen eines Keils (39), um den das Seil (33) gewunden ist, bis zu einer vorbestimmten Position in einem Gehäuseabschnitt (38), der im Aufnahmehauptkörper (32) einer Seilaufnahme (31) ausgebildet ist, fesrtlegt,
wobei der Seilende-Befestigungsmechanismus Folgendes umfasst:
ein Basiselement (30) mit einer vorbestimmten Länge und einer rechteckigen Form;
ein Bewegungsregulierungselement (35), das ein Paar von Einheitsbewegungsregulierungselementen (35A) quer zum Aufnahmehauptkörper (32) umfasst, welcher Regulierungsflächen (34) umfasst, wobei die Regulierungsflächen (34) eine Bewegung des Aufnahmehauptkörpers (32) in Längsrichtung des Basiselements (30), in welche der Aufnahmehauptkörper (32) zwischen den Einheitsbewegungsregulierungselementen (35A) eintritt, und eine Bewegung des Aufnahmehauptkörpers (32) in eine Kurzseitenrichtung des Basiselements (30) regulieren, wobei die Einheitsbewegungsregulierungselemente (35A) auf dem Basiselement (30) fixiert sind, um das Einstellen einer gegenseitigen Abstandslänge zu gewährleisten;
ein Halteelement (36), das auf einer Lastseite (33A) und einer Endseite (33B) des aus dem Aufnahmehauptkörper (32) herausgeführten Seils (33) fixiert ist und bewegbar in Bezug auf das Basiselement (30) angeordnet ist; und
ein Abstandselement (37), das zwischen dem Halteelement (36) und dem Bewegungsregulierungselement (35) angeordnet ist und einen Abstand zwischen dem Halteelement (36) und dem Bewegungsregulierungselement (35) ändert.

2. Seilende-Befestigungsvorrichtung nach Anspruch 1,
wobei der Aufnahmehauptkörper (32) Seitenflächen aufweist, auf denen ein Paar von geneigten Flächen, die sich in Richtung einer dem Seil (33) gegenüberliegenden Seite erstrecken, ausgebildet ist, und
wobei die Regulierungsflächen (34) des Bewegungsregulierungselements (35) als Paar von Regulierungsflächen (34) ausgebildet sind, die das Paar von geneigten Flächen des Aufnahmehauptkörpers (32) von beiden Seiten sandwichartig umgeben, wobei das Paar von Regulierungsflächen (34) Neigungen entlang des Paars von geneigten Flächen des Aufnahmehauptkörpers (32) aufweist und auf dem Paar von geneigten Flächen des Aufnahmehauptkörpers (32) in Anlage gebracht ist.

3. Seilende-Befestigungsvorrichtung nach Anspruch 1,
wobei das Halteelement (36) ein Paar von Einheitshalteelementen (36A) umfasst und das Paar von Einheitshalteelementen (36A) die Lastseite (33A) und die Endseite (33B) des Seils (33) von beiden Seiten sandwichartig umgibt, um auf der Lastseite (33A) und der Endseite (33b) des Seils (33) fixiert zu sein.

4. Seilende-Befestigungsvorrichtung nach Anspruch 3,
wobei das Einheitshalteelement (36A) eine Fläche oder beide Flächen aufweist, auf der/auf denen ein Paar von Seilfixierungrillen (41) ausgebildet ist, wobei das Paar von Seilfixierungsrillen (41) die Lastseite (33A) und die Endseite (33B) des Seils (33) aufnimmt.

5. Seilende-Befestigungsvorrichtung nach Anspruch 4,
wobei das Einheitshalteelement (36A) eine Fläche oder beide Flächen aufweist, auf der/auf denen zwei Paare von Seilfixierungsrillen (41) in zueinander senkrechte Richtungen ausgebildet sind.

6. Seilende-Befestigungsvorrichtung nach Anspruch 5,
wobei das Paar von Einheitshalteelementen (36A) die Lastseite (33A) und die Endseite (33B) des Seils (33), das mit Befestigungselementen (42A, 42B) zu fixieren ist, sandwichartig umgibt und die Befestigungselemente (42A, 42B) durch Führungsrillen (43), die auf dem Basiselement (30) ausgebildet sind und entlang einer Bewegungsrichtung des Halteelements (36) ausgebildet sind, geführt werden.

7. Seilende-Befestigungsvorrichtung nach einem der Ansprüche 1 bis 6,
wobei das Abstandselement (37) eine Nivellierschraube (37) ist, die zwischen dem Halteelement (36) und dem Bewegungsregulierungselement (35) angeordnet ist.

8. Seilende-Befestigungsvorrichtung nach Anspruch 7,
wobei die Nivellierschraube (37) ein Ende aufweist, das mit einer Mutterplatte, welche auf jeder von Endflächen des Halteelements (36) oder des Bewegungsregulierungselements (35) angeordnet ist, verschraubt ist.

9. Seilende-Befestigungsverfahren unter Verwendung eines Befestigungsmechanismus, umfassend ein Basiselement (30) mit einer vorbestimmten Länge und einer rechteckigen Form, ein Bewegungsregulierungselement (35), das ein Paar von Einheitsbewegungsregulierungselementen (35A) quer zu einem Aufnahmehauptkörper (32) umfasst, welcher Regulierungsflächen (34) umfasst, wobei die Regulierungsflächen (34) eine Bewegung des Aufnahmehauptkörpers (32) in Längsrichtung des Basiselements (30), in welche der Aufnahmehauptkörper (32) zwischen den Einheitsbewegungsregulierungselementen (35A) eintritt, und eine Bewegung des Aufnahmehauptkörpers (32) in eine Kurzseitenrichtung des Basiselements (30) regulieren, wobei die Einheitsbewegungsregulierungselemente (35A) auf dem Basiselement (30) fixiert sind, um das Einstellen einer gegenseitigen Abstandslänge zu gewährleisten, ein Halteelement (36), das auf einer Lastseite (33A) und einer Endseite (33B) des aus dem Aufnahmehauptkörper (32) herausgeführten Seils (33) fixiert und bewegbar in Bezug auf das Basiselement (30) angeordnet ist, und ein Abstandselement (37), das zwischen dem Halteelement (36) und dem Bewegungsregulierungselement (35) angeordnet ist und einen Abstand zwischen dem Halteelement (36) und dem Bewegungsregulierungselement (35) ändert,
wobei das Verfahren Folgendes umfasst:
Winden des Seils (33) um einen Keil (39), der im Aufnahmehauptkörper (32) aufzunehmen ist;
Installieren des Aufnahmehauptkörpers (32), in dem das Seil (33) und der Keil (33) aufgenommen sind, im Bewegungsregulierungselement (35), wobei die gegenseitige Abstandslänge der Einheitsbewegungsregulierungselemente (35A) eingestellt wird, um in den Aufnahmehauptkörper (32) zu passen;
Fixieren der Lastseite (33A) und der Endseite (33B) des aus dem Aufnahmehauptkörper (32) freigelegten Seils (33) auf dem Halteelement (36); und
Trennen des Halteelements (36) und des Bewegungsregulierungselements (35) mit dem Abstandselement (37), um Positionen des Keils (39) und des Seils (33), die im Aufnahmehauptkörper (32) aufgenommen sind, einzustellen.

## Revendications

1. Dispositif d'attache d'extrémité de câble comprenant un mécanisme d'attache d'extrémité de câble qui attache un corps principal de douille (32) et un câble (33) en attirant une cale (39), autour de laquelle le câble (33) est enroulé, jusqu'à une position prédéterminée dans une partie de logement (38) formée dans le corps principal de douille (32) d'une douille de câble (31),
dans lequel le mécanisme d'attache d'extrémité de câble inclut :
un élément de base (30) présentant une longueur prédéterminée et une forme rectangulaire ;
un élément de régulation de déplacement (35) qui inclut une paire d'éléments de régulation de déplacement unitaires (35A) à travers le corps principal de douille (32) incluant des surfaces de régulation (34), les surfaces de régulation (34) régulant un déplacement du corps principal de douille (32) dans une direction longitudinale de l'élément de base (30) où le corps principal de douille (32) s'insère entre les éléments de régulation de déplacement unitaires (35A), et régulant un déplacement du corps principal de douille (32) dans une direction de côté court de l'élément de base (30), les éléments de régulation de déplacement unitaires (35A) étant fixés à l'élément de base (30) pour assurer un ajustement d'une longueur d'intervalle mutuelle ;
un élément de maintien (36) qui est fixé à un côté de charge (33A) et à un côté d'extrémité (33B) du câble (33) extrait du corps principal de douille (32) et est disposé de manière mobile par rapport à l'élément de base (30) ; et
un élément de séparation (37) qui est disposé entre l'élément de maintien (36) et l'élément de régulation de déplacement (35) et modifie une distance entre l'élément de maintien (36) et l'élément de régulation de déplacement (35).

2. Dispositif d'attache d'extrémité de câble selon la revendication 1,
dans lequel le corps principal de douille (32) présente des surfaces latérales sur lesquelles une paire de surfaces inclinées s'étendant vers un côté opposé au câble (33) est formée, et
les surfaces de régulation (34) de l'élément de régulation de déplacement (35) sont formées sous la forme d'une paire de surfaces de régulation (34) enserrant la paire de surfaces inclinées du corps principal de douille (32) des deux côtés, la paire de surfaces de régulation (34) présentant des inclinaisons le long de la paire de surfaces inclinées du corps principal de douille (32) et venant en butée sur la paire de surfaces inclinées du corps principal de douille (32).

3. Dispositif d'attache d'extrémité de câble selon la revendication 1,
dans lequel l'élément de maintien (36) inclut une paire d'éléments de maintien unitaires (36A), et la paire d'éléments de maintien unitaires (36A) enserre le côté de charge (33A) et le côté d'extrémité (33B) du câble (33) à partir des deux côtés pour être fixés au côté de charge (33A) et au côté d'extrémité (33B) du câble (33).

4. Dispositif d'attache d'extrémité de câble selon la revendication 3,
dans lequel l'élément de maintien unitaire (36A) présente une surface ou les deux surfaces sur lesquelles une paire de rainures de fixation de câble (41) est formée, la paire de rainures de fixation de câble (41) logeant le côté de charge (33A) et le côté d'extrémité (33B) du câble (33).

5. Dispositif d'attache d'extrémité de câble selon la revendication 4,
dans lequel l'élément de maintien unitaire (36A) présente une surface ou les deux surfaces sur lesquelles deux paires de rainures de fixation de câble (41) sont formées dans des directions mutuellement perpendiculaires.

6. Dispositif d'attache d'extrémité de câble selon la revendication 5,
dans lequel la paire d'éléments de maintien unitaires (36A) enserre le côté de charge (33A) et le côté d'extrémité (33B) du câble (33) à fixer avec des attaches (42A, 42B), et les attaches (42A, 42B) sont guidées par des rainures de guidage (43) qui sont formées sur l'élément de base (30) et sont formées le long d'une direction de déplacement de l'élément de maintien (36).

7. Dispositif d'attache d'extrémité de câble selon l'une quelconque des revendications 1 à revendication 6,
dans lequel l'élément de séparation (37) est un boulon d'écartement (37) disposé entre l'élément de maintien (36) et l'élément de régulation de déplacement (35).

8. Dispositif d'attache d'extrémité de câble selon la revendication 7,
dans lequel le boulon d'écartement (37) présente une extrémité filetée avec une plaque d'écrou disposée sur chacune de surfaces d'extrémité de l'élément de maintien (36) ou de l'élément de régulation de déplacement (35).

9. Procédé d'attache d'extrémité de câble utilisant un mécanisme d'attache d'extrémité de câble qui inclut un élément de base (30) présentant une longueur prédéterminée et une forme rectangulaire, un élément de régulation de déplacement (35) qui inclut une paire d'éléments de régulation de déplacement unitaires (35A) à travers un corps principal de douille (32) incluant des surfaces de régulation (34), les surfaces de régulation (34) régulant un déplacement du corps principal de douille (32) dans une direction longitudinale de l'élément de base (30) où le corps principal de douille (32) s'insère entre les éléments de régulation de déplacement unitaires (35A), et régulant un déplacement du corps principal de douille (32) dans une direction de côté court de l'élément de base (30), les éléments de régulation de déplacement unitaires (35A) étant fixés à l'élément de base (30) pour assurer un ajustement d'une longueur d'intervalle mutuelle, un élément de maintien (36) qui est fixé à un côté de charge (33A) et à un côté d'extrémité (33B) du câble (33) extrait du corps principal de douille (32) et est disposé de manière mobile par rapport à l'élément de base (30), et un élément de séparation (37) qui est disposé entre l'élément de maintien (36) et l'élément de régulation de déplacement (35) et modifie une distance entre l'élément de maintien (36) et l'élément de régulation de déplacement (35),
le procédé comprenant les étapes consistant à :
enrouler le câble (33) autour d'une cale (39) à loger dans le corps principal de douille (32) ;
installer le corps principal de douille (32) dans lequel le câble (33) et la cale (39) sont logés sur l'élément de régulation de déplacement (35) où les éléments de régulation de déplacement unitaires (35A) présentent la longueur d'intervalle mutuelle ajustée pour s'adapter au corps principal de douille (32) ;
fixer le côté de charge (33A) et le côté d'extrémité (33B) du câble (33) exposé depuis le corps principal de douille (32) à l'élément de maintien (36) ; et
séparer l'élément de maintien (36) et l'élément de régulation de déplacement (35) à l'aide de l'élément de séparation (37) pour ajuster les positions de la cale (39) et du câble (33) qui sont logés dans le corps principal de douille (32).
